# EUROPÄISCHE PATENTSCHRIFT

(11) **EP 3 728 657 B1**
(45) Veröffentlichungstag und Bekanntmachung des Hinweises auf die Patenterteilung: **11.08.2021**
(21) Anmeldenummer: 18836368.3
(22) Anmeldetag: 21.12.2018
(51) Int. Cl.: C21D 8/06, C22C 38/04

(54) **VERFAHREN ZUM ERZEUGEN METALLISCHER BAUTEILE MIT ANGEPASSTEN BAUTEILEIGENSCHAFTEN**
METHOD FOR GENERATING METALLIC COMPONENTS HAVING CUSTOMISED COMPONENT PROPERTIES
PROCÉDÉ DESTINÉ À PRODUIRE DES COMPOSANTS MÉTALLIQUES À PROPRIÉTÉS DE COMPOSANTS ADAPTÉES

(30) Priorität: 22.12.2017 DE 102017131247
(43) Veröffentlichungstag der Anmeldung: 28.10.2020
(73) Patentinhaber: voestalpine Stahl GmbH, 4020 Linz (AT)
(72) Erfinder: PICHLER, Andreas, 4840 Vöcklabruck (AT); KURZ, Thomas, 4020 Linz (AT); REHRL, Johannes, 4502 St. Marien (AT)
(74) Vertreter: HGF
(86) Internationale Anmeldenummer: PCT/EP2018/086661
(87) Internationale Veröffentlichungsnummer: WO 2019/122362

(56) Entgegenhaltungen:
- EP-A1- 3 231 885
- DE-A1-102009 030 489
- DE-A1-102010 055 148
- DE-A1-102012 002 079
- YI H L ET AL: "Dual-phase hot-press forming alloy", MATERIALS SCIENCE AND ENGINEERING: A, Bd. 527, Nr. 18, 1. Januar 2010 (2010-01-01), Seiten 4870-4874, XP029181335, ISSN: 0921-5093, DOI: 10.1016/J.MSEA.2010.04.022

## Beschreibung

Die Erfindung betrifft ein Verfahren zum Erzeugen von metallischen Bauteilen nach dem Oberbegriff des Anspruchs 1. Insbesondere betrifft die Erfindung ein Verfahren zum Herstellen von Stahlblechen und daraus Stahlbauteilen.

In der Vergangenheit hat sich die Notwendigkeit ergeben, aus Gründen der Energieeinsparung Fahrzeuge und insbesondere die Fahrzeugkarosserien leichter auszubilden. Zudem hat sich aber zusätzlich noch die Anforderung ergeben, Fahrzeugkarosserien stabiler zu machen und insbesondere den Innenraum im Falle einer Verunfallung wirksam zu schützen. Dementsprechend hat sich in der Vergangenheit herauskristallisiert, die Karosserie von Fahrzeugen zu mindestens teilweise aus sehr hoch härtbaren Stählen (CMnB-Stählen) auszubilden. Diese hoch härtbaren Stähle werden in Blechform bereitgestellt, anschließend umgeformt und die umgeformten Bauteile anschließend sehr hoch erhitzt, bis sie vollständig austenitisiert sind, dann in eine Kühlpresse überführt und in dieser Kühlpresse durch allseitiges Anliegen von kalten Werkzeugbacken oder -Formen mit einer Geschwindigkeiten über der kritischen Härtegeschwindigkeit abgekühlt, so dass das vollständig austenitisierte Bauteil zumindest überwiegend in der martensitischen Phase vorliegt, welches Härten bis über 1500 MPa ermöglicht. Dieses Verfahren, bei dem zunächst umgeformt und dann gehärtet und durch das Anlegen der Form abgekühlt wird, wird auch als indirektes Verfahren oder Formhärten bezeichnet.

Beim sogenannten Presshärten wird die Platine aus dem hoch härtbaren Stahl auf eine Temperatur oberhalb der Austenitisierungstemperatur aufgeheizt und möglichst vollständig austenitisiert. Anschließend wird diese im Austenitzustand vorliegende Platine in ein Umformwerkzeug überführt und mit einem Pressenhub oder mehreren Pressenhüben sowohl umgeformt als auch durch den großen Wärmeabfluss aus der Platine in das Formwerkzeug gehärtet. Dieses Verfahren wird auch als direktes Verfahren bzw. multiform Verfahren bezeichnet.

Durch diese beiden Verfahren war und ist es grundsätzlich möglich, eine Fahrzeugkarosserie mit sehr harten Teilen auszubilden und die übrige Karosserie entsprechend auch abgestuft aus Teilen anderer Duktilitäten und Härten herzustellen.

Eine moderne Fahrzeugkarosserie besteht somit aus einer Anzahl von lastleitenden, hochfesten Bauteilen als auch aus weichen, verformungsfähigen Elementen für die Energieabsorption.

Aber nicht nur hochhärtbare CMnB-Stähle werden warmumgeformt, sondern auch andere Stahlgüten, insbesondere, um das bessere Verformungsverhalten bei Wärme auszunutzen, um komplexe Bauteilgeometrien auszuformen.

Wie auch bei den oben genannten Blechen kann es hierbei bei Stahlblechen dazu kommen, dass aufgrund der Temperatur sich das Gefüge ändert.

Wird nun ein solch heißes Stahlblech in eine kalte Form eingelegt, hat sich gezeigt, dass insbesondere beim Einlegen des Blechs aber auch während der Zeit vom Entnehmen aus dem Ofen bis zum Einlegen in die Form unterschiedliche Kühlbedingungen herrschen können und auch in der Form unterschiedliche Kühlbedingungen herrschen können. Dies kann es schwierig machen, Toleranzen einzuhalten.

Aufgabe der Erfindung ist es, ein Verfahren zu schaffen, bei dem in einfacher und kostengünstiger Weise warmumgeformte Blechbauteile mit gleichbleibenden Eigenschaften und stabilen mechanischen Kennwerten zu schaffen.

Die Aufgabe wird mit einem Verfahren mit den Merkmalen des Anspruchs 1 gelöst.

Es ist eine weitere Aufgabe, einen Werkstoff zu schaffen, der kühlsituationsunabhängig und unabhängig vom Kühlverlauf stabile mechanische Kennwerte sicherstellt.

Die Aufgabe wird mit einem Werkstoff mit den Merkmalen des Anspruchs 12 gelöst.

Vorteilhafte Weiterbildungen sind in den hiervon abhängigen Unteransprüchen gekennzeichnet.

Erfindungsgemäß wird der Werkstoff einem Stahl mit einem Dualphasengefüge (DP-Stahl) ausgebildet. Das erfindungsgemäße Dualphasengefüge besteht aus einer ferritischen Matrix mit eingelagerten Martensitinklusionen. Dies erlaubt durch das enorme Verfestigungsvermögen bei gleicher Festigkeit eine deutlich bessere Umformbarkeit im Sinne der Bruchdehnung und damit höhere Energieabsorption als ferritisch-perlitische Gefüge, wie sie im Stand der Technik bekannt sind. Daher sind diese Stähle mit einem Dualphasengefüge nach der Erfindung sehr gut geeignet.

Bekannte Dualphasenstähle sind zum Beispiel aus der EP 2 896 715 B1 bekannt, bei denen ein Dualphasenstahl mit Titanausscheidungshärtung beschrieben wird.

Aus der EP 2 290 111 B1 ist ein Dualphasenstahl mit ferritischem Gefüge für Automobile bekannt.

Aus der JP 2009/132981 A ist ein ferritischer kaltgewalzter Stahl mit höherer Umformbarkeit bekannt.

Aus der WO2017/144419 A1 ist ein pressgehärteter Stahl mit Dualphasengefüge bekannt.

Aus der US 2010/0221572 A1 ist ein pressgehärteter Stahl mit einem Gefüge aus Ferrit und Bainit und Martensit bekannt.

Aus der DE 10 2014 11 21 26 A1 ist ein mikrolegierter Stahl mit einer gegebenen Kühlratenzahl bekannt.

Aus der EP 2 896 715 B1 ist ein Dualphasenstahl mit Titanausscheidungshärtung bekannt.

Erfindungsgemäß wurde festgestellt, dass zur Erzielung eines ferritisch-martensitischen Dualphasengefüges beim Warmumformen bzw. Presshärten die Perlit- und Bainitbildung derart verzögert werden muss, dass diese Gefügephasen bei den üblichen Kühlraten nicht auftreten.

Erfindungsgemäß können, um die Perlit- und Bainitbildung zu verzögern, Mangan, Chrom, Bor und Molybdän zulegiert werden. Es hat sich jedoch herausgestellt, dass hierdurch auch die Ferritbildung nach dem vollaustenitischen Glühen im Ofen verzögert wird, was bei kurzen Transferzeiten zwischen Ofen und Presse, hohen Einlegetemperaturen und hohen Kühlraten in der Presse kritisch ist.

Hierdurch kann sich ein Gefüge ausbilden, welches aus einer angelassenen-martensitischen Matrix mit wenig Ferrit besteht, welches bei hohen Festigkeiten nur geringe Dehnungen aufweist. Erst bei geringeren Kühlraten in der Presse stellen sich stabile mechanische Kennwerte, unabhängig von der Einlegetemperatur, in der Presse ein.

Erfindungsgemäß wird, um eine ausreichende Menge an Ferrit und damit eine ferritische Matrix im Gefüge sicherzustellen, der Werkstoff im Ofen derart geglüht, dass neben Austenit auch Ferrit vorliegt. Somit wird erfindungsgemäß im Ofen interkritisch geglüht. Interkritisch glühen bedeutet, dass der Werkstoff zwischen seiner Ac1 und Ac3 Temperatur geglüht wird.

Die nötige Ferritmenge, um eine ferritische Matrix darzustellen, wird während des Kühlens zwischen Ofen und Presse neben der Ferritkeimbildung mit anschließendem Ferritwachstum auch durch das stetige Wachstum des vom interkritischen Glühen vorliegenden Ferrits erzielt. Erfindungsgemäß muss daher die Ac3-Temperatur für den Stahl hoch gehalten werden, so dass ein interkritisches Glühen überhaupt möglich ist. Erfindungsgemäß wird der Ac3-Wert durch Aluminium erhöht.

Erfindungsgemäß wird daher der Dualphasenstahl mit einem erhöhten Aluminiumgehalt ausgebildet. Somit wird ein vollaustenitischer Glühzustand legierungsbedingt verhindert. Die Glühtemperatur wird dabei auf etwa > 800°C festgelegt, so dass dieser Glühwert für das interkritische Glühen als gegeben angenommen werden muss.

Grundsätzlich besteht somit das Konzept der Erfindung auf einem C-Si-Mn-Cr-Al-Nb/Ti-Legierungskonzept.

Der enthaltene Kohlenstoff dient der Anpassung des Festigkeitsniveaus, wobei ein höherer Kohlenstoffgehalt den Ac3-Wert absenkt, die Festigkeit erhöht und die Streckgrenze ebenfalls erhöht. Allerdings nimmt die Dehnung ab, die Ferrit-, Perlit- und Bainitbildung werden verzögert und die Martensitmenge im Gefüge steigt.

Die Aufgabe des Mangans ist die Anpassung des Festigkeitsniveaus. Mehr Mangan senkt den Ac3-Wert, zudem erhöht es die Festigkeit und die Streckgrenze. Bei einem höheren Mangangehalt nimmt die Dehnung ab und die Ferrit-, Perlit- und Bainitbildung wird verzögert und die Martensitmenge im Gefüge steigt.

Wie bereits ausgeführt, wird bei dem erfindungsgemäßen Konzept Aluminium verwendet, denn mehr Aluminium erhöht den Ac3-Wert, wodurch die Empfindlichkeit auf die Einlegetemperatur in die Presse sinkt. Zudem werden Verbesserungen der Dehnung erzielt, die Martensitmenge im Gefüge sinkt und die Ferritmenge steigt.

Silizium hebt bei der erfindungsgemäßen Legierung das Festigkeitsniveau, steigert den Ac3-Wert und verzögert die Perlit- und Bainitbildung.

Typische Werte von Ae1-Temperaturen bzw. Ae3-Temperaturen für erfindungsgemäße DP Stähle als auch nicht erfindungsgemäße Legierungen sind in Tabelle 1 angeführt. Diese gerechneten Werte entsprechen im Wesentlichen der Ac1-Temperaturen bzw. Ac3-Temperaturen.

Bei den nicht erfindungsgemäßen Ausführungsbeispielen wird entweder eine zu niedrige Ae1-Temperatur bzw Ae3-Temperatur durch die jeweils gewählte Legierungszusammensetzung erzielt und/oder die gewünschten mechanischen Kennwerte (bsp. durch zu niedrige Siliziumanteile) nicht erreicht.

Durch Chrom werden vor allem die Perlit- und Bainitbildung verzögert und die Martensitbildung sichergestellt, so dass Chrom einen großen Einfluss darauf hat, den Dualphasencharakter sicherzustellen.

Niob und Titan forcieren die Ferritbildung und haben einen kornfeinernden Einfluss.

Somit gelingt es erfindungsgemäß, einen Stahlwerkstoff in Form eines Dualphasenstahls zur Verfügung zu stellen, der unabhängig von der Kühlsituation stabile mechanische Kennwerte liefert und somit zu zuverlässig erzeugten und ausgestalteten Tailored Welded Blanks im Presshärte- oder Formhärteverfahren führt.

Die Erfindung wird anhand einer Zeichnung beispielhaft erläutert. Es zeigen dabei:
- Figur 1:: die Dehnung und die Festigkeit von Dualphasengefügen und ferritischperlitischen Gefügen nach dem Stand der Technik;
- Figur 2:: das Verhalten vollaustenitisch geglühter Dualphasenstähle bei hohen Kühlraten in der Presse, zeigend einmal die Festigkeit, abhängig von der Einlegetemperatur und die Dehnung, abhängig von der Einlegetemperatur, sowie das erzielbare Gefüge;
- Figur 3:: das Verhalten vollaustenitisch geglühter Dualphasenstähle bei hohen und geringen Kühlraten in der Presse;

- Figur 4:: den Einfluss des Kohlenstoffs auf die mechanischen Kennwerte, abhängig von der Einlegetemperatur;
- Figur 5:: Gefügeaufnahmen von Dualphasenstählen mit unterschiedlichem Kohlenstoffgehalt;
- Figur 6:: den Einfluss des Mangans auf die mechanischen Kennwerte;
- Figur 7:: die Gefügebilder bei unterschiedlichen Mangangehalten;
- Figur 8:: den Einfluss des Aluminiums auf die mechanischen Kennwerte;
- Figur 9:: die Gefügeaufnahmen bei unterschiedlichen Aluminiumgehalten;
- Figur 10:: Einfluss des interkritisch geglühten Aluminium-legierten erfindungsgemäßen Dualphasenstahlkonzeptes im Vergleich zu vollaustenitisch geglühten Kohlenstoff-Mangan-Legierungen.

Das erfindungsgemäße Verfahren sieht vor, im Presshärte- oder Formhärte-Verfahren aus einem ebenen Blechteil aus einem Dualphasenstahl ein Blechbauteil zu erzeugen.

Ein solches ebenes Blechteil aus dem erfindungsgemäßen DP-Stahl kann demnach ausreichend erhitzt und dann umgeformt werden, oder umgeformt, dann erhitzt und abgeschreckt werden.

Erfindungsgemäß wird ein Dualphasenstahl verwendet, der einen vergleichsweise hohen Aluminiumgehalt besitzt. Erfindungsgemäß wurde herausgefunden, dass Aluminium die Empfindlichkeit der mechanischen Kennwerte auf die Einlegetemperatur senkt und stark die Empfindlichkeit auf die Kühlrate in der Presse senkt.

Einfache Kohlenstoff-Mangan-Legierungen, welche im Ofen vollaustenitisch geglüht werden, weisen bei hohen Kühlraten in der Presse eine starke Abhängigkeit von der Einlegetemperatur auf.

Eine erfindungsgemäße Zusammensetzung des Dualphasenstahls lautet wie folgt, wobei alle Prozentangaben in Masse-Prozent angegeben sind:

| | |
|---|---|
| C | 0,02 - 0,12 %, bevorzugt 0,04 - 0,10 % |
| Si | 0,5 - 2,0 %, bevorzugt 0,55 - 1,50 % |
| Mn | 0,5 - 2,0 %, bevorzugt 0,6 - 1,50 % |
| Cr | 0,3 - 1,0 %, bevorzugt 0,45 - 0,80 % |
| Al | 0,5 - 1,5 %, bevorzugt 0,60 - 1,20 % |
| Nb | < 0,20 %, bevorzugt 0,01 - 0,10 % |
| Ti | < 0,20 %, bevorzugt 0,01 - 0,10 % |

Rest Eisen und unvermeidliche erschmelzungsbedingte Verunreinigungen.

Bei einer Haltezeit im Ofen bis 600 Sekunden, insbesondere bis 300 Sekunden wird bezüglich des Dualphasenstahls lediglich eine Teilaustenitisierung erzielt, bei Glühtemperaturen von um 840°C.

Der Austenitisierungsgrad, der sich im Dualphasenstahl einstellt, beträgt zwischen 50 und 90 Vol-%, wobei das Zielgefüge ein feiner Dualphasenstahl mit ferritischer Matrix und 5 bis 20 Vol-% Martensit und gegebenenfalls etwas Bainit ist.

Das Zielgefüge stellt sich ein, wenn der nachfolgende Kühlverlauf eingehalten wird und dementsprechend bei der Manipulation des Bauteils oder der Platine in die Kühlpresse, also während des Handlings, eine Kühlrate von 5 bis 550 Kelvin/sec eingehalten wird und die Einlegetemperatur in die Kühlpresse 400 bis 850°C bevorzugt 450 bis 750°C beträgt. Beim Formhärteprozess, d.h. einem Prozess bei dem zunächst kalt umgeformt wird und das kalt umgeformte Bauteil anschließend erhitzt wird und in einem Formhärtewerkzeug rasch abgekühlt und gehalten wird, liegt die Einlegetemperatur bevorzugt bei 700°C bis 850°C. Beim Presshärteprozess, also einem Prozess, bei dem eine ebene Platine aufgeheizt wird und anschließend in einem Presshärtewerkzeug umgeformt und abgekühlt wird, liegt die Einlegetemperatur bevorzugt bei 400°C bis 650°C, weiter bevorzugt bei 440°C bis 600°C und besonders bevorzugt bei 450°C bis 520°C.

Ein besonderer Effekt beim Presshärteprozess, also dem direkten Verfahren, ist, dass insbesondere bei 450°C bis 520°C Einlegetemperatur, sich das Gefüge optimal einstellen lässt, so dass sich ein besonders abkühlratenrobustes System ergibt.

Die Kühlrate in der Presse sollte ≥ 10 Kelvin/sec betragen.

Es kann hierfür eine Luftkühlung (etwa 5 Kelvin/sec bis 70 Kelvin/sec Abkühlrate) oder beispielsweise eine Plattenkühlung vorgenommen werden (Abkühlraten von mehr als 80 Kelvin/sec problemlos erzielbar).

Die sich ergebenden mechanischen Eigenschaften liegen erfindungsgemäß bei:

| | |
|---|---|
| R_{p0,2} | 250 bis 500 MPa |
| Rₘ | 400 bis 900 MPa |
| A | ≥ 10 %. |

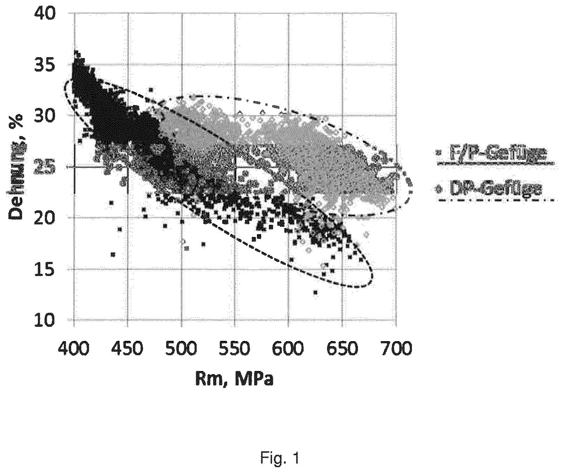

In Figur 1 erkennt man die Unterschiede bezüglich des Verhaltens der Dehnung zur Zugfestigkeit Rₘ bei einem ferritisch-perlitischen Gefüge (grau) und einem Dualphasengefüge (schwarz). Man erkennt, dass ein Dualphasengefüge für die erfindungsgemäßen Zwecke eine sehr gute Eignung aufweist.

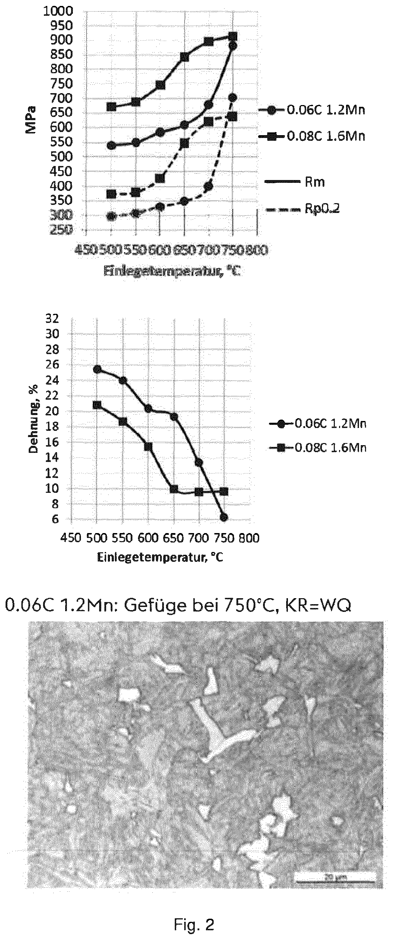

Bei der Legierungsanpassung kommt es aber nach dem Stand der Technik zu den folgenden Problemen:
Vollaustenitisch geglühte Dualphasenstähle weisen bei hohen Kühlraten in der Kühlpresse ungünstige Eigenschaften auf. Man erkennt in Figur 2, dass bei zwei unterschiedlichen Stählen, nämlich einmal einem Stahl mit 0,06 % Kohlenstoff und 1,2 % Mangan und einem anderen Dualphasenstahl mit 0,08 % Kohlenstoff und 1,6 % Mangan, abhängig von der Einlegetemperatur, eine sehr große Spannweite bezüglich der Zugfestigkeit Rₘ besteht, die bei dem Stahl mit weniger Kohlenstoff und weniger Mangan von ca. 550 MPa bis 880 MPa reicht.

Auch bei dem Stahl mit höherem Kohlenstoff- und höherem Mangangehalt beträgt die erzielbare Zugfestigkeit etwa 660 MPa bis etwa 920 MPa. Dies bedeutet aber auch, dass bei den variablen Einlegetemperaturen und bei den prozessüblichen Schwankungen bei der Einlegetemperatur mit den bekannten Dualphasenstählen reproduzierbare Festigkeitswerte innerhalb der gewünschten Toleranzen schwierig zu produzieren sind. In gleicher Weise verhält es sich mit dem R_{p0,2}-Wert, der in vergleichbarer Weise schwankt, so dass diese beiden wichtigen Kennwerte weit davon entfernt sind, im üblichen Prozessfenster sicher in einem überschaubaren Bereich eingehalten werden zu können.

Betrachtet man die Dehnung, verhält es sich bei beiden Stählen ähnlich, dass die Dehnungswerte, abhängig von der Einlegetemperatur, so stark schwanken, dass herkömmliche Dualphasenstähle bei den bekannten Prozessfenstern keine zuverlässigen Zielwerte erreichen. Das Gefüge des niedriger legierten Stahles aus den beiden Grafiken ist dargestellt bei 750° Einlegetemperatur und einer Abkühlrate, die durch Wasserkühlung erzielt wurde.

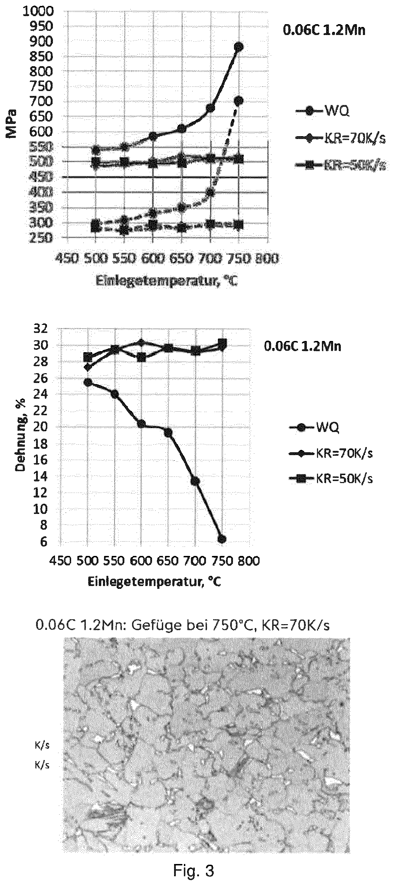

In Figur 3 erkennt man zudem, dass die gezeigten Kennwerte insbesondere beim Abkühlen mit Wasser stark von der Einlegetemperatur und der Kühlrate in der Presse abhängen, wobei auch das Gefüge sich deutlich vom Gefüge nach Figur 2 unterscheidet, da in Figur 2 eine deutliche höhere Kühlrate vorliegt.

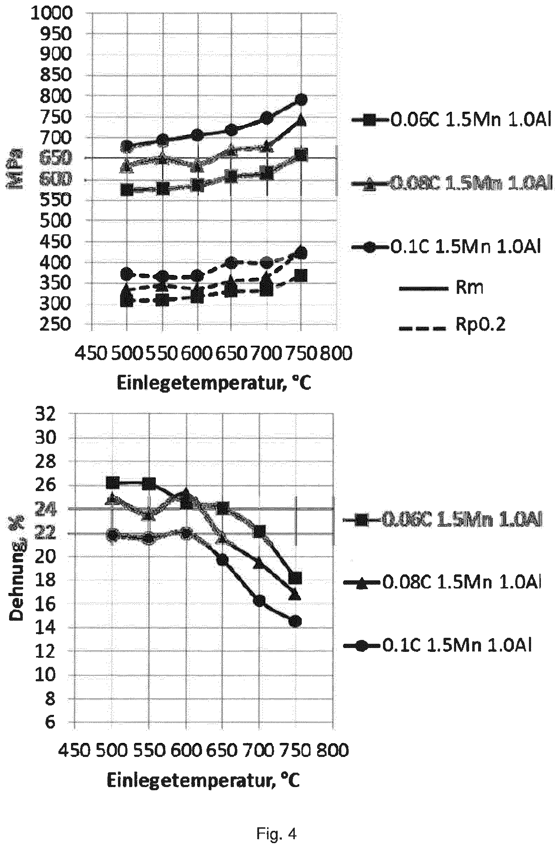

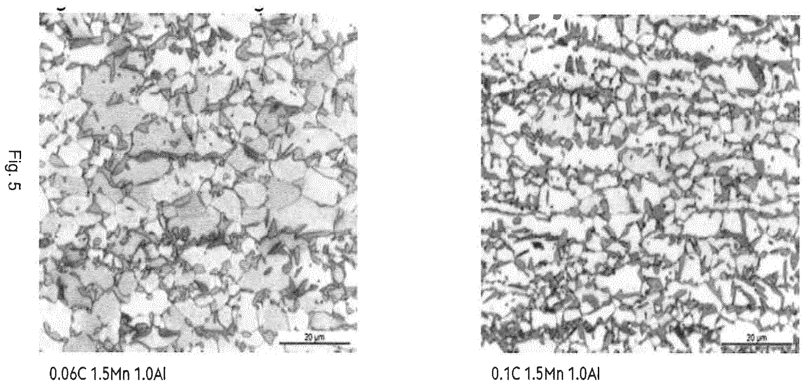

In Figur 4 erkennt man bei gleichen Mangangehalten und gleichen Aluminiumgehalten den Einfluss des Kohlenstoffs auf die vorgenannten Kennwerte, abhängig von der Einlegetemperatur. Man erkennt, dass mit steigendem Kohlenstoffgehalt die Festigkeit und die Streckgrenze erhöht werden. In Figur 5 erkennt man, dass die Ferritmenge im angegebenen Stahl abhängig von dem Kohlenstoffgehalt bei steigendem Kohlenstoffgehalt sinkt.

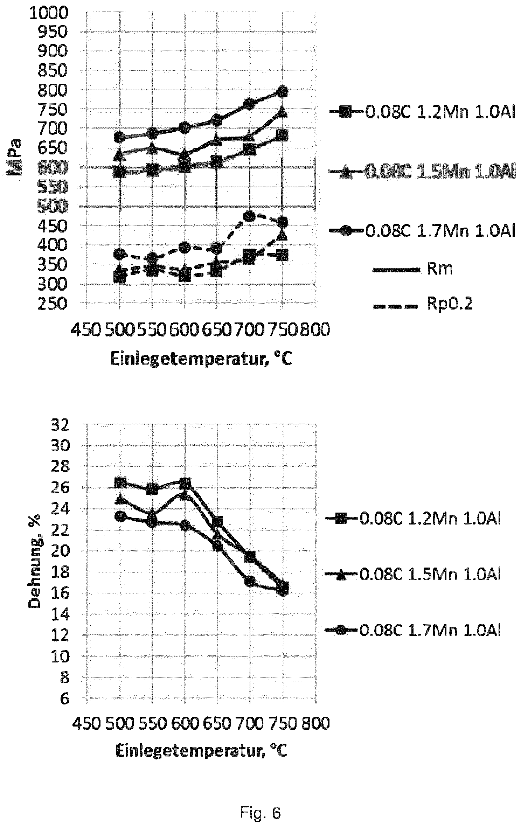

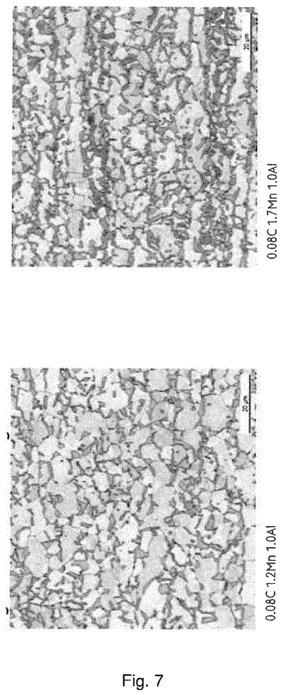

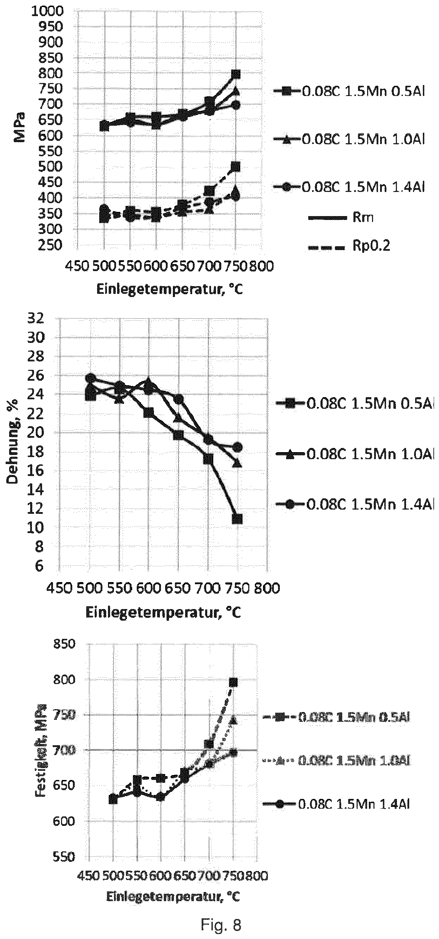

Bei gleichen Kohlenstoffgehalten und gleichen Aluminiumgehalten erkennt man in Figur 6 und in Figur 8 den Einfluss des Mangans. Bei steigendem Mangangehalt steigen ebenfalls die Festigkeit und die Streckgrenze, während, wie in Figur 7 deutlich sichtbar, die Martensitmenge im Gefüge steigt und die Ferritmenge sinkt.

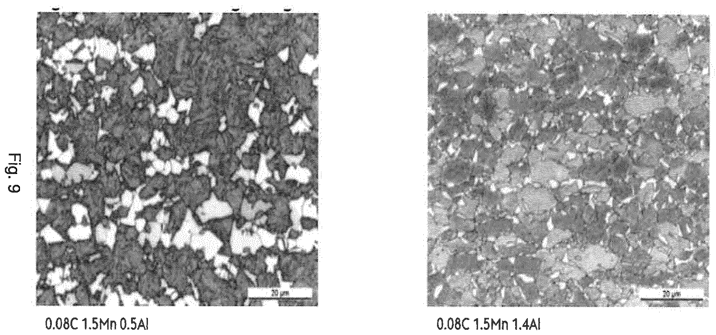

Entscheidend für die Erfindung ist, dass ein steigender Aluminiumgehalt (Figuren 8, 9) die Empfindlichkeit auf die Einlegetemperatur in der Presse absinken lässt. Man erkennt sehr deutlich in Figur 8, dass die Zugfestigkeit von der Einlegetemperatur bei einem höheren Aluminiumgehalt wenig abhängig ist, als bei 0,5 % Aluminium. Noch stärker zeigt sich dieser Effekt bei dem R_{p0,2}-Wert.

Auch, was die Dehnung betrifft, kann hier eine Vergleichmäßigung erzielt werden. In der Ausschnittsvergrößerung betreffend die Festigkeit, abhängig von der Einlegetemperatur, erkennt man noch einmal sehr deutlich, dass der steigende Aluminiumgehalt zu einer deutlichen Vergleichsmäßigung führt.

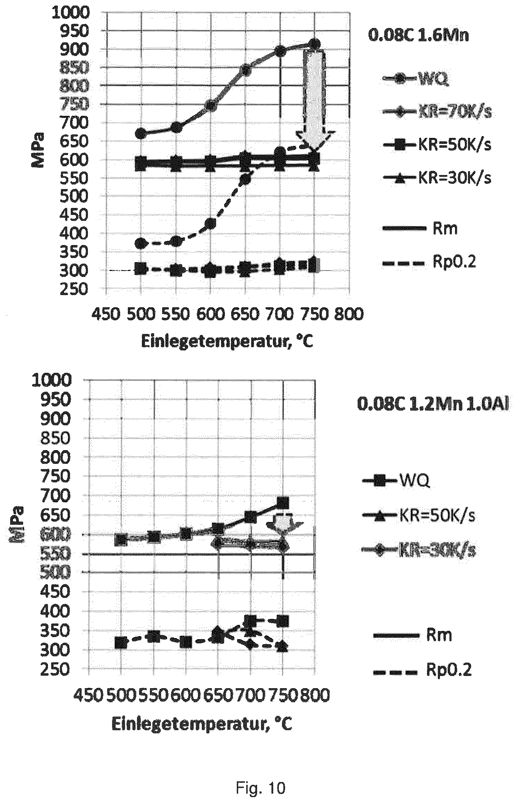

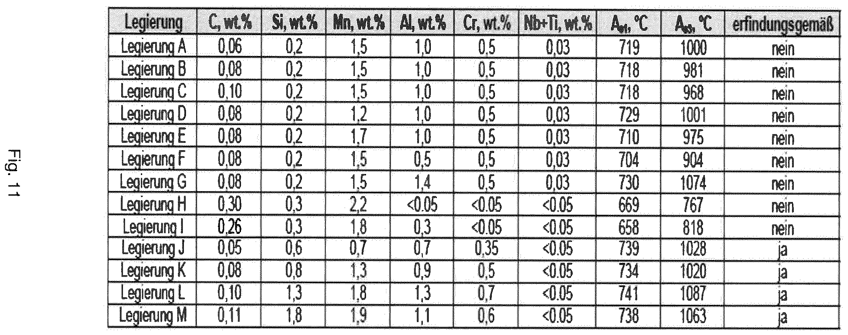

In Figur 9 erkennt man, dass durch den steigenden Aluminiumgehalt die Ferritmenge deutlich ansteigt. In Figur 10 erkennt man, dass bei voll austenitisch geglühten Kohlenstoff-Mangan-Legierungen die Festigkeit bei hohen Einlegetemperaturen massiv von der Kühlrate in der Presse abhängt, wobei bei interkritisch geglühten aluminiumlegierten Dualphasenkonzepten die Abhängigkeit der mechanischen Eigenschaften von der Einlegetemperatur als auch von der Kühlrate der Presse deutlich reduziert ist, wie man dies in den beiden Diagrammen der Figur 10 sieht, wobei links ein nicht-aluminiumlegierter Stahl verwendet wird und rechts ein aluminiumlegierter Dualphasenstahl.

Erfindungsgemäß gelingt es daher, um eine ausreichende Menge an Ferrit und damit eine ferritische Matrix im Dualphasengefüge sicherzustellen, im Ofen interkritisch zu glühen, so dass neben Austenit auch Ferrit vorliegt. Die Ac3-Temperatur muss für den weichen Partnerwerkstoff, also den Dualphasenstahl, hoch gehalten werden, so dass das interkritische Glühen überhaupt möglich ist. Dieser Ac3-Wert wird durch Aluminium erfindungsgemäß erhöht.

Bei der Erfindung ist somit von Vorteil, dass die guten Eigenschaften des Dualphasenstahls auf ein Verfahren zum Press- oder Formhärten übertragen werden können.

## Patentansprüche

1. Verfahren zum Herstellen eines Stahlblechbauteils mittels eines Presshärte- oder Formhärteverfahrens, wobei das Stahlblechbauteil dadurch erzeugt wird, dass eine Platine aus einem Dualphasenstahl kalt umgeformt wird, anschließend erhitzt wird und in einer Abkühlpresse abgeschreckt wird, oder eine Platine aus einem Dualphasenstahl auf einer Temperatur oberhalb der Austenitisierungstemperatur des hoch härtbaren Stahlwerkstoffs aufgeheizt wird und anschließend in einer Umform- und Abkühlpresse mit einem Hub oder mehreren Hüben zu dem Stahlblechbauteil umgeformt wird,
**dadurch gekennzeichnet, dass**
ein Dualphasenstahl verwendet wird, dessen Ac3-Wert so weit angehoben ist, dass es bei den erforderlichen Glühtemperaturen nur zu einer Teilaustenitisierung des Dualphasenstahls kommt, so dass beim Einlegen in die Abkühlpresse der Dualphasenstahl eine ferritische Matrix besitzt, neben der Austenit vorhanden ist, wobei
der Werkstoff die folgende Zusammensetzung in Masse-% besitzt:
| | |
|---|---|
| C | 0,02 - 0,12 %, |
| Si | 0,5 - 2,0%, |
| Mn | 0,5 - 2,0%, |
| Cr | 0,3 - 1,0%, |
| Al | 0,5 - 1,5%, |
| Nb | < 0,10 %, |
| Ti | < 0,10 % |
Rest Eisen und unvermeidliche erschmelzungsbedingte Verunreinigungen.

2. Verfahren nach Anspruch 1,
**dadurch gekennzeichnet, dass**
die Glühtemperaturen > 800°C, bevorzugt 840°C, insbesondere > 870°C jedoch kleiner Ac3 des Dualphasenstahls betragen.

3. Verfahren nach Anspruch 1 oder 2,
**dadurch gekennzeichnet, dass**
die Haltezeit im Ofen zwischen 0 und 600 Sekunden bevorzugt 5 und 300 Sekunden beträgt.

4. Verfahren nach einem der vorhergehenden Ansprüche,
**dadurch gekennzeichnet, dass**
der Ac3-Wert des Dualphasenstahls so hoch ist, dass sich der bei der Haltezeit und der Temperatur einstellender Austenitisierungsgrad zwischen 50 Vol.-% und 90Vol.-% liegt.

5. Verfahren nach einem der vorhergehenden Ansprüche,
**dadurch gekennzeichnet, dass**
die Kühlrate beim Überführen des umgeformten Bauteils oder der Platine aus dem Ofen in die Abkühl- und/oder Umformpresse zwischen 5 Kelvin/sec und 500 Kelvin/sec insbesondere 5 Kelvin/sec und 100 Kelvin/sec besonders bevorzugt zwischen 10 Kelvin/sec und 70 Kelvin/sec liegt.

6. Verfahren nach einem der vorhergehenden Ansprüche,
**dadurch gekennzeichnet, dass**
die Einlegetemperatur in die Presse zwischen 450 und 850°C bevorzugt zwischen 450 und 750°C liegt.

7. Verfahren nach Anspruch 6,
**dadurch gekennzeichnet, dass**
die Einlegetemperatur beim Formhärteprozess bei 700°C bis 850°C liegt.

8. Verfahren nach Anspruch 6,
**dadurch gekennzeichnet, dass**
die Einlegetemperatur beim Presshärteprozess bei 400°C bis 650°C liegt, bevorzugt 440°C bis 600°C und besonders bevorzugt bei 450°C bis 520°C.

9. Verfahren nach einem der vorhergehenden Ansprüche,
**dadurch gekennzeichnet, dass**
die Kühlrate in der Presse ≥ 10 Kelvin/sec beträgt.

10. Verfahren nach einem der vorhergehenden Ansprüche,
**dadurch gekennzeichnet, dass**
das als Dualphasenstahl ein Stahl verwendet wird, der 0,5 bis 1,5 % bevorzugt 0,6 bis 1,3 % Aluminium enthält.

11. Verfahren nach einem der vorhergehenden Ansprüche,
**dadurch gekennzeichnet, dass**
die Glühtemperatur so eingestellt ist, dass der Dualphasenstahl interkritisch also zwischen seiner Ac1 und Ac3-Temperatur geglüht wird.

12. Dualphasenstahlwerkstoff für die Verwendung in dem Verfahren nach einem der vorhergehenden Ansprüche
**dadurch gekennzeichnet, dass**
der Werkstoff die folgende Zusammensetzung in Masse-% besitzt:
| | |
|---|---|
| C | 0,02 - 0,12 %, |
| Si | 0,5 - 2,0%, |
| Mn | 0,5 - 2,0%, |
| Cr | 0,3 - 1,0%, |
| Al | 0,5 - 1,5%, |
| Nb | < 0,10 %, |
| Ti | < 0,10 % |
Rest Eisen und unvermeidliche erschmelzungsbedingte Verunreinigungen.

13. Werkstoff nach Anspruch 12,
**wobei**
C= 0,04 - 0,10 Masse-%, insbesondere 0,05 - 0,08 Masse-%.

14. Werkstoff nach Anspruch 12 oder 13,
**wobei**
Si= 0,5 - 1,50 Masse-%, insbesondere 0,5 - 1,25 Masse-%.

15. Werkstoff nach einem der Ansprüche 12 bis 14,
**wobei**
Mn= 0,60 - 1,50 Masse-%, insbesondere 0,70 - 1,25 Masse-%.

## Claims

1. Method of manufacturing a sheet steel component by means of a press-hardening or form-hardening process wherein the steel sheet component is produced by cold-forming a blank from a dual-phase steel, then heating it and quenching it in a quench press, or to reheat a blank of a dual-phase steel to a temperature above the austenitising temperature of the highly hardenable steel material and to then to reshape it in a forming or quench press with one stroke or a series of strokes to form the steel sheet component,
**characterised in that**
a dual-phase steel is used whose Ac3 value has been raised so high that, at the required annealing temperatures, only a partial austenitising temperature of the dual-phase steel is obtained so that, when placed in the quench press, the dual-phase steel has a ferrite matrix, alongside which austenite is present, wherein
the material has the following composition in mass %,
| | |
|---|---|
| C | 0.02 - 0.12% |
| Si | 0.5 - 2.0% |
| Mn | 0.5 - 2.0% |
| Cr | 0.3 - 1.0 % |
| A1 | 0.5 - 1.5 % |
| Nb | < 0.10 % |
| Ti | < 0.10 % |
The remainder being iron and unavoidable impurities from the melting process.

2. Method according to claim 1
**characterised in that**
the annealing temperatures are > 800°C, preferably 840°C, in particular > 870°C but lower than Ac3 of the dual-phase steel.

3. Method according to claims 1 or 2,
**characterised in that**
the holding time in the oven is between 0 and 600 seconds, preferably 5 and 300 seconds.

4. Method according to any one of the preceding claims
**characterised in that**
the Ac3 value of the dual-phase steel is so high that at the austenitising degree set for the holding time and temperature is between 50 % v/v and 90 % v/v.

5. Method according to any one of the preceding claims
**characterised in that**
the cooling rate when transferring the formed component or the blank from the oven to the quenching and/or the forming press is between 5 kelvin/sec and 500 kelvin/sec, in particular 5 kelvin/sec and 100 kelvin/sec and, particularly preferred, between 10 kelvin/sec and 70 kelvin/sec.

6. Method according to any one of the preceding claims
**characterised in that**
the temperature when placing in the press is between 450 and 850°C, preferably between 450 and 750°C.

7. Method according to claim 6,
**characterised in that**
the temperature when placing in the press during the form hardening process is between 700°C and 850°C.

8. Method according to claim 6,
**characterised in that**
the temperature when placing in the press-hardening process is 400°C to 650°C, preferably 440°C to 600°C and, particularly preferably, 450°C to 520°C.

9. Method according to any one of the preceding claims,
**characterised in that**
the cooling rate in the press is ≥ 10 kelvin/sec.

10. Method according to any one of the preceding claims,
**characterised in that**
a steel is used as a dual-phase steel which contains 0.5 to 1.5 %, preferably 0.6 to 1.3 % of aluminium.

11. Method according to any one of the preceding claims,
**characterised in that**
the annealing temperature is set such that the dual-phase steel is annealed intercritically, that is, between its Ac1 and Ac3 temperature.

12. Dual-phase steel material for employment in the method according to any one of the preceding claims
**characterised in that**
the material has the following composition in mass %:
| | |
|---|---|
| C | 0.02 - 0.12% |
| Si | 0.5 - 2.0% |
| Mn | 0.5 - 2.0 % |
| Cr | 0.3 - 1.0% |
| Al | 0.5 - 1.5% |
| Nb | <0.10% |
| Ti | <0.10% |
The remainder being iron and unavoidable impurities from the melting process.

13. Material according to claim 12,
**wherein**
C = 0.04 - 0.10 mass %, in particular 0.05 - 0.08 mass %.

14. Material according to claims 12 or 13,
**wherein**
Si = 0.5 - 1.50 mass %, in particular 0.5 - 1.25 mass %.

15. Material according to claims 12 to 14,
**wherein**
Mn = 0.60 - 1.50 mass %, in particular 0.70 - 1.25 mass %.

## Revendications

1. Procédé de fabrication d'un composant de tôle d'acier au moyen d'un procédé de formage à chaud et de pressage à chaud, dans lequel le composant de tôle en acier est généré de telle sorte qu'une platine en acier biphasé est transformée à froid, puis chauffée et trempée dans une presse de refroidissement, ou une platine en acier biphasé est chauffée à une température supérieure à la température d'austénitisation du matériau en acier trempant et enfin transformée dans une presse de transformation et de refroidissement avec une course ou plusieurs courses vers le composant en tôle d'acier,
**caractérisé en ce qu'**
un acier biphasé est utilisé, acier dont la valeur Ac3 est levée de manière à n'atteindre qu'une austénitisation partielle de l'acier biphasé à des températures de recuit nécessaires de manière à ce que l'acier biphasé possède une matrice ferrique, outre l'austénite, en l'insérant dans la presse de refroidissement le matériau possédant la composition suivante en % en masse :
| | |
|---|---|
| C | 0,02-0,12 %, |
| Si | 0,5-2,0 %, |
| Mn | 0,5-2,0 %, |
| Cr | 0,3-1,0 %, |
| Al | 0,5-1,5 %, |
| Nb | < 0,10 %, |
| Ti | < 0,10 % |
le restant étant du fer et des impuretés inévitables résultant de la fusion.

2. Procédé selon la revendication 1,
**caractérisé en ce que**
les températures de recuit sont > 800 °C, de préférence 840 °C, notamment > 870°C, mais inférieures à Ac3 de l'acier biphasé.

3. Procédé selon la revendication 1 ou 2,
**caractérisé en ce que**
la durée de maintien dans le four se situe entre 0 et 600 secondes, de préférence 5 et 300 secondes.

4. Procédé selon l'une des revendications précédentes,
**caractérisé en ce que**
la valeur Ac3 de l'acier biphasé est si élevée que le niveau d'austénitisation se situe entre 50 % du volume et 90 % du volume lors de la durée de maintien et la température.

5. Procédé selon l'une des revendications précédentes,
**caractérisé en ce que**
le taux de refroidissement lors du transfert du composant transformé ou de la platine depuis le four dans la presse de refroidissement et/ou de transformation se situe entre 5 Kelvin/sec et 500 Kelvin/sec, notamment 5 Kelvin/sec et 100 Kelvin/sec, mieux encore entre 10 Kelvin/sec et 70 Kelvin/sec.

6. Procédé selon l'une des revendications précédentes,
**caractérisé en ce que**
la température d'enfournement dans la presse se situe entre 450 et 850 °C, de préférence entre 450 et 750 °C.

7. Procédé selon la revendication 6,
**caractérisé en ce que**
la température d'enfournement se situe entre 700 °C et 850 °C lors du processus de formage à chaud.

8. Procédé selon la revendication 6,
**caractérisé en ce que**
la température d'enfournement se situe entre 400 °C et 650 °C, de préférence entre 440 °C et 600 °C et mieux encore entre 450 °C et 520 °C lors du processus de pressage à chaud.

9. Procédé selon l'une des revendications précédentes,
**caractérisé en ce que**
le taux de refroidissement dans la presse est ≥ 10 Kelvin/sec.

10. Procédé selon l'une des revendications précédentes,
**caractérisé en ce qu'**
un acier est utilisé comme acier biphasé qui contient 0,5 à 1,5 %, de préférence 0,6 à 1,3 % d'aluminium.

11. Procédé selon l'une des revendications précédentes,
**caractérisé en ce que**
la température de recuit est réglée de telle sorte que l'acier biphasé est recuit de manière sous-critique entre ses températures Ac1 et Ac3.

12. Matériau en acier biphasé à utiliser dans le procédé, selon l'une des revendications précédentes,
**caractérisé en ce que**
le matériau possède la composition suivante en % en masse :
| | |
|---|---|
| C | 0,02-0,12 %, |
| Si | 0,5-2,0 %, |
| Mn | 0,5-2,0 %, |
| Cr | 0,3-1,0 %, |
| Al | 0,5-1,5 %, |
| Nb | < 0,10 %, |
| Ti | < 0,10 % |
le restant étant du fer et des impuretés inévitables résultant de la fusion.

13. Matériau selon la revendication 12,
**comprenant**
C = 0,04-0,10 % en masse, notamment 0,05-0,08 % en masse.

14. Matériau selon la revendication 12 ou 13,
**comprenant**
Si = 0,5-1,50 % en masse, notamment 0,5-1,25 % en masse.

15. Matériau selon l'une des revendications 12 à 14,
**comprenant**
Mn = 0,60-1,50 % en masse, notamment 0,70-1,25 % en masse.
